# EUROPEAN PATENT APPLICATION

(11) **EP 4 840 317 A1**
(43) Date of publication of application: **18.11.2026**
(21) Application number: 26167802.3
(22) Date of filing: 25.03.2026
(51) Int. Cl.: A21D 8/00

(54) **METHOD AND ASSEMBLY FOR DOSING A BAKING ADDITIVE INTO A BAKING COMPOSITION**

(30) Priority: 16.05.2025 NL 2040380
(71) Applicant: Kaak Groep B.V., 7061 GA Terborg (NL)
(72) Inventor: BLANKVOORT, Remco Albert Nanko, 7061 GA TERBORG (NL)
(74) Representative: Peters, Sebastian Martinus

(57) **Abstract**

The invention relates to a method and an assembly for dosing a baking additive into a baking composition. The method comprises the following steps:
- providing a hopper, wherein the hopper comprises a hopper chamber and an injector, wherein the injector comprises an injection opening that debouches in the hopper chamber,
- providing the baking composition into the hopper chamber, wherein the baking composition at least partially covers the injection opening,
- providing a dosing apparatus comprising a transfer chamber, wherein the transfer chamber is connected to the injection opening of the injector,
- dosing a predetermined amount of the baking additive into the transfer chamber,
- pressurizing the transfer chamber by providing a pressurized fluid to the transfer chamber, and
- injecting the baking additive into the baking composition via the injection opening by fluid connecting the transfer chamber to the injection opening.

## Description

### BACKGROUND

The invention relates to a method and an assembly for dosing a baking additive into a baking composition.

It is common practice in the bakery industry to add one or more baking additives to a baking composition to improve a quality, shelf life, flavor, texture and/or appearance of the resulting bakery product. For example, an addition of an emulsifier or a preservative to a baking composition comprising wheat flour for producing bread. An amount of the baking additives needed to provide a desired effect is small relative to the other components of the baking composition, in particular relative to an amount of flour present in the baking composition.

Due to the small amounts needed, it can be difficult for a bakery to accurately and reproducibly handle, weigh and add the required amounts of the baking additives to the baking composition. In addition to simple spillage, a portion of the baking additives may be lost in the form of airborne dust generated upon a pouring of the baking additives into a hopper containing the other components of the baking composition. In particular when the hopper is provided with a filter unit for removing airborne dust to limit a dust exposure of workers, the airborne baking additives are not incorporated into the baking composition. This in turn leads to an undesirable variation in a quality of the final bakery products.

A known solution to this problem is combining the baking additives with a relatively large amount of a carrier, such as a flour, to provide for a pre-mix. This pre-mix is subsequently supplied to the bakery separate from the other components that make up the desired baking composition. As a result of the increased weight or volume of the pre-mix that needs to be added by the bakery to the baking composition, an accuracy of the dosing is improved especially when the pre-mix is manually dosed into the baking composition.

### SUMMARY OF THE INVENTION

A disadvantage of providing the one or more baking additives in combination with a relatively large amount of a carrier, is that the used carrier may be of an undesirable type or quality for a specific baking recipe. This either results in a degradation of a quality of the finished bakery products or a need for the bakery to stock a plurality of different pre-mixes.

It is an object of the present invention to provide for a method and an assembly for dosing a baking additive into a baking composition that nullifies or at least reduces an amount of a carrier needed to provide for an accurate dosing of the baking additive.

According to a first aspect, the present invention provides a method for dosing a baking additive into a baking composition, wherein the method comprises the following steps:
- providing a hopper, wherein the hopper comprises a hopper chamber and an injector, wherein the injector comprises an injection opening that debouches in the hopper chamber,
- providing the baking composition into the hopper chamber, wherein the baking composition at least partially covers the injection opening,

- providing a dosing apparatus comprising a transfer chamber, wherein the transfer chamber is connected to the injection opening of the injector,
- dosing a predetermined amount of the baking additive into the transfer chamber,
- pressurizing the transfer chamber by providing a pressurized fluid to the transfer chamber, and
- injecting the baking additive into the baking composition via the injection opening by fluid connecting the transfer chamber to the injection opening.

An injection of the baking additive into the baking composition provides for a transfer of the predetermined amount of the baking additive from the transfer chamber to the hopper chamber substantially without a loss of the baking additive from the hopper chamber in the form of airborne particulates. In particular, a volume or layer of the baking composition that covers the injection opening of the injector acts as a barrier or blanket between the baking additive and a top portion of the hopper chamber. Hence, a loss of the baking additive to an external environment or a filter unit arranged at or near the top portion of the hopper chamber is substantially avoided. This provides for a more accurate and reproducible dosing of the baking additive into the baking composition. Accordingly, the present invention allows for using a baking additive that is substantially pure or at least comprises a substantially lower amount of a carrier.

A further advantage of an use of a more concentrated baking additive is a reduction in a storage space needed by a bakery. In addition, as many components of the baking composition, for example a flour, are commonly sourced from a supplier geographically more near to the bakery when compared to a supplier of baking additives. As a result, providing a flour as a separate ingredient instead of via a carrier in combination with the baking additive provides a reduction in transport costs and CO₂ emissions.

In an embodiment, the hopper chamber further comprises a discharge opening arranged at a bottom portion of the hopper chamber and a filling opening arranged at a top portion of the hopper chamber, wherein the step of injecting the baking additive into the baking composition comprises directing a jet comprising a pressurized fluid and the baking additive into the hopper chamber in a first direction, wherein the first direction faces towards the discharge opening and/or away from the filing opening. Alternatively or additionally, the first direction does not face towards the filing opening. Injecting the baking additive in the first direction further reduces a likelihood that the baking additive is lost to an environmental external to the hopper chamber or a filter unit arranged at or near the top portion of the hopper chamber.

In an embodiment, the dosing apparatus further comprises a dosing unit, wherein the dosing unit comprises a dosing reservoir comprising the baking additive, wherein the step of dosing the predetermined amount of the baking additive into the transfer chamber further comprises causing the dosing unit to dose the predetermined amount of the baking additive.

In an embodiment, the dosing apparatus further comprises:
- an intermediate chamber that is fluid connected to the dosing unit, wherein the intermediate chamber is arranged downstream from the dosing unit and upstream from the transfer chamber, and
- a further dosing unit fluid connected to the intermediate chamber and comprising a further dosing reservoir, wherein the further dosing reservoir comprises a further baking additive different from the baking additive, wherein the step of dosing the predetermined amount of the baking additive further comprises:

- causing the dosing unit to dose the predetermined amount of the baking additive into the intermediate chamber,
- causing the further dosing unit to dose the predetermined amount of the further baking additive into the intermediate chamber, and
- transferring the baking additive and the further baking additive from the intermediate chamber to the transfer chamber. Alternatively, the step of transferring the baking additive is performed before the step of causing the further dosing unit to dose the predetermined amount of the further baking additive into the intermediate chamber.

In an embodiment, the method further comprises a step of sealing the transfer chamber, wherein the step of sealing the transfer chamber is performed after the step of dosing the predetermined amount of the baking additive into the transfer chamber and before the step of pressurizing the transfer chamber.

In an embodiment, the transfer chamber further comprises a baking additive inlet for transferring the predetermined amount of the baking additive into the transfer chamber, wherein the dosing apparatus further comprises a first flow control unit arranged upstream from the baking additive inlet and downstream from the dosing unit, wherein the step of sealing the transfer chamber further comprises causing the first flow control unit to block a fluid connection between the baking additive inlet of the transfer chamber and the dosing unit.

In an embodiment, the transfer chamber further comprises a discharge outlet for discharging the predetermined amount of the baking additive from the transfer chamber, wherein the dosing apparatus further comprises an injection conduit connected between the discharge outlet of the transfer chamber and the injector for providing a fluid connection between the discharge outlet of the transfer chamber and the injection opening of the injector, wherein the dosing apparatus further comprises a second flow control unit arranged downstream from the discharge outlet of the transfer chamber and upstream from the injector opening, wherein the step of sealing the transfer chamber further comprises causing the second flow control unit to block a fluid connection between the discharge outlet of the transfer chamber and the injection opening.

In an embodiment, the baking additive comprises one or more enzymes, preferably wherein the one or more enzyme is/are an amylase, a protease or a lipase. As an especially small amount of an enzyme is needed to provide a desired effect compared to other baking additives, enzymes are typically supplied with an especially large amount of carrier in order to allow for an accurate dosing by bakers. Accordingly, the reduction in a need for a carrier provided by the present invention is especially advantageous for enzymes.

In an embodiment, the baking additive is a powdery baking additive.

In an embodiment, the baking composition is a powdery baking composition.

In an embodiment, the pressurized fluid is a pressurized gas, preferably wherein the pressurized gas is pressurized air.

In an embodiment, the step of providing the baking composition into the hopper chamber comprises covering the injection opening with a layer of the baking composition.

In an embodiment, the method further comprises the following steps performed after the step of injecting the baking additive into the baking composition:
- discharging the baking composition and the baking additive through a discharge opening of the hopper into a kneading and/or mixing vessel,
- adding at least one liquid, preferably wherein the at least one liquid comprises water,
- mixing and/or kneading the baking composition, the baking additive and the at least one liquid into a dough. After the formation of a dough, the dough may subsequently be portion into one or more dough portions and baked into a bakery product such as a bread product.

In an embodiment, the method further comprises the following steps:
- determining a first weight of the transfer chamber, wherein the step of determining the first weight of the transfer chamber is performed after the step of providing the predetermined amount of the baking additive into the transfer chamber and before the step of injecting the baking additive into the baking composition, and
- determining a second weight of the transfer chamber, wherein the step of determining the second weight of the transfer chamber is performed after the step of injecting the baking additive into the baking composition. Accordingly, by calculating a difference between the first weight and the second weight it can be determined how much of the baking additive has been injected into the baking composition.

In an embodiment, the method further comprises the following step performed after the step of injecting the baking additive into the baking composition:
- pressurizing the transfer chamber by providing a pressurized fluid to the transfer chamber, and
- injecting the pressurized fluid into the baking composition via the injection opening by fluid connecting the transfer chamber to the injection opening. By repeating the steps of pressurizing the transfer chamber and injecting the contents of the transfer chamber, comprising the pressurized fluid and any remaining traces of the predetermined amount of the baking additive, helps ensure substantially all of the baking additive dosed into the transfer chamber is injected into the baking composition. Accordingly, the above steps of pressurizing and injecting the pressurized fluid in particular do not comprise an additional step of dosing a further predetermined amount of the baking additive.

In an embodiment, the baking composition comprises one or more flours, preferably wherein the one or more flours comprises a cereal flour and/or a wheat flour.

In an embodiment, the one or more flours are a majority component of the baking composition.

In an embodiment, the baking additive and/or the further baking additive is selected or comprises one or more from the following: an emulsifier, a preservative, a flour, a gluten, a sugar, a lactose, an ascorbic acid, a lecithin, a baking salt, sodium chloride, potassium chloride, a calcium salt, mono- and diglycerides, a guar gum, an xanthan gum and a baking powder.

According to a second aspect, the present invention provides an assembly for dosing a baking additive into a baking composition, wherein the assembly comprises a hopper, wherein the hopper comprises:
- a hopper chamber for holding the baking composition,
- an injector comprising an injection opening that debouches in a lower portion of the hopper chamber for injecting the baking additive into the hopper chamber, wherein the assembly further comprises a dosing apparatus, wherein the dosing apparatus comprises:
- a transfer chamber for holding the baking additive, wherein the transfer chamber comprises a baking additive inlet for receiving a predetermined amount of the baking additive and a discharge outlet for discharging the predetermined amount of the baking additive,
- an injection conduit connected with the discharge outlet of the transfer chamber and an input of the injector for transferring the predetermined amount of the baking additive from the transfer chamber to the injection opening, and
- a source of pressurized fluid connected to the transfer chamber via the baking additive inlet or a pressurized fluid inlet for providing a pressurized fluid to the transfer chamber. The above assembly provides substantially the same advantages as discussed above with respect to the first aspect of the invention.

In an embodiment, the hopper chamber further comprises a discharge opening for discharging the baking composition from the hopper chamber, wherein the discharge opening is arranged at a bottom portion of the hopper chamber, wherein the hopper chamber further comprises a filing opening for providing the baking composition into the hopper chamber, wherein the filing opening is arranged at a top portion of the hopper chamber, wherein the injector is configured for directing a jet comprising a pressurized fluid and the baking additive via the injector opening into the hopper chamber in a first direction, wherein the first direction faces towards the discharge opening and/or away from the filling opening. Alternatively or additionally, the first direction does not face towards the filing opening. Preferably the discharge opening is arranged a bottommost portion of the hopper chamber.

In an embodiment, the dosing apparatus further comprises a dosing unit for dosing the predetermined amount of the baking additive into the transfer chamber.

In an embodiment, the dosing apparatus further comprises:
- an intermediate chamber fluid connected to the dosing unit, wherein the intermediate chamber is arranged downstream from the dosing unit and upstream from the transfer chamber, and
- a further dosing unit fluid connected to the intermediate chamber, wherein the further dosing unit is configured for dosing a further baking additive into the intermediate chamber.

In an embodiment, the dosing apparatus further comprises a first flow control unit arranged upstream from the baking additive inlet and downstream from the dosing unit, wherein the first flow control unit is configured for controlling a flow of fluid between the baking dosing unit and the baking additive inlet.

In an embodiment, the dosing apparatus further comprises a second flow control unit arranged downstream from the discharge outlet of the transfer chamber and upstream from the injector opening, wherein the second flow control unit is configured for controlling a flow of fluid between the discharge outlet and the injector opening.

In an embodiment, the baking additive is a powdery baking additive.

In an embodiment, the baking composition is a powdery baking composition.

In an embodiment, the pressurized fluid is a pressurized gas, preferably wherein the pressurized gas is pressurized air.

In an embodiment, the pressurized fluid inlet is a pressurized air inlet.

In an embodiment, the assembly further comprises a mixing and/or kneading unit arranged below a discharge opening of the hopper chamber, wherein the mixing and/or kneading vessel is configured for mixing and/or kneading the baking composition and the baking additive into a dough.

In an embodiment, the dosing apparatus further comprises a frame and at least one weighing unit, wherein the transfer chamber is connected to the frame via the at least one weighing unit, wherein the at least one weighing unit is configured for determining a weight of the transfer chamber.

In an embodiment, the assembly further comprises a control unit configured for causing the assembly to perform the method according to the first aspect or any one embodiment thereof. The control unit is preferably communicatively connected to at least the dosing unit, the further dosing unit, the first flow control unit, the second flow control unit and/or the source of pressurized fluid.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a cross-sectional view of a first example of an assembly comprising a dosing apparatus and a hopper;
Figure 2 shows a cross-sectional view of a second example of an assembly comprising a dosing apparatus;
Figure 3 shows a cross-sectional view of a third example of an assembly comprising a hopper.

### DETAILED DESCRIPTION OF THE INVENTION

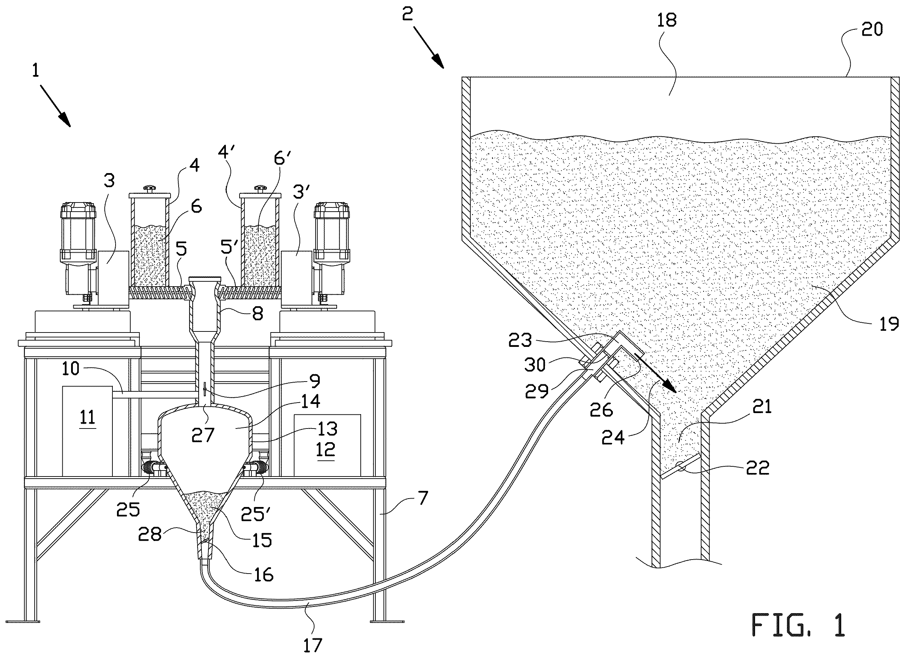

Figure 1 shows a cross-sectional view of a first example of an assembly comprising a hopper 2 and a dosing apparatus 1. The hopper 2 comprises a hopper chamber 18 for holding a baking composition 19. In the present example the baking composition 19 is a powdery baking composition comprising a flour, in particular a wheat flour. The hopper 2 is further shown to comprise a filing opening 20 arranged at an upper portion of the hopper chamber 18 for a filling of the hopper 2 with one or more ingredients that make up the baking composition 19. The hopper 2 further comprises a discharge opening 21 arranged at a lower portion of the hopper chamber 18 for discharging the contents of the hopper chamber 18 from the hopper 2. The hopper 2 is furthermore provided with a discharge valve 22 for controlling a flow of the baking composition 19 through the discharge opening 21. The hopper 2 is furthermore shown to be provided with an injector 23. The injector 23 comprises an injection opening 26 that debouches in a lower and/or bottom portion of the hopper chamber 18. The injection opening 26 is shown to be covered by a layer of the baking composition 19.

The dosing apparatus 1 is shown to comprise a frame 7. The dosing apparatus 1 is provided with a pair of dosing units 3, 3' attached to the frame 7. Each of the dosing units 3, 3' comprises a dosing reservoir 4, 4' for respectively holding a first baking additive 6 and a second baking additive 6', wherein the second baking additive 6' is different from the first baking additive 6. In the present example the first baking additive 6 is a preservative 6 and second baking additive is an emulsifier 6'. The dosing apparatus 1 further comprises an intermediate chamber 8 that is fluid connected to each of the dosing units 3, 3' for receiving the first and second baking additives 6, 6' from the dosing units 3, 3'. For dosing the first and second baking additives 6, 6' the dosing units 3, 3' each comprise a dosing screw 5, 5' for dosing a predetermined amount of the respective baking additive 6, 6' from the dosing reservoirs 4, 4' into the intermediate chamber 8. In the present example the dosing reservoirs 4, 4' are each configured for holding less than 25 kilograms of baking additive 6, 6', while the hopper chamber 18 of the hopper 2 is configured for holding several hundred kilograms of the baking composition 19.

The dosing apparatus 1 is shown to further comprise a transfer vessel 13. The transfer vessel 13 comprises a pressurizable transfer chamber 14 for holding one or more baking additives 6, 6'. The transfer vessel 13 further comprises a baking additive inlet 27 for receiving and transferring the first and second baking additives 6, 6' into the transfer chamber 14. The dosing apparatus 1 further comprises a first flow control unit 9 fluid connected between the baking additive inlet 27 and the intermediate chamber 8. The first flow control unit 9 is configured for controlling a flow of a fluid between the intermediate chamber 8 and the baking additive inlet 27. The first flow control unit 9 is shown to be set to allow a flow of a fluid from the intermediate chamber 9 to the baking additive inlet 27.

Figure 1 shows a situation wherein the dosing units 3, 3' are in a process of dosing a predetermined amount of the first and second baking additives 6, 6' via the intermediate chamber 8, the first flow control unit 9 and the baking additive inlet 27 into the transfer chamber 14 of the transfer vessel 13. Accordingly, figure 1 shows that the transfer chamber 14 holds a mixture 15 of the first baking additive 6 and the second baking additive 6'. The dosing apparatus 1 further comprises a pair of weighing units 25, 25' attached to the frame 7, wherein the transfer vessel 13 is mounted via the pair of weighing units 25, 25' to the frame 7. The pair of weighing units 25, 25' are configured for weighing the transfer vessel 13. The weighing units 25, 25' allow for a determination of a weight of the mixture 15 of the first baking additive 6 and the second baking additive 6' dosed into the transfer chamber 14 by the pair of dosing units 3, 3'.

The transfer vessel 13 further comprises a discharge outlet 28 for discharging the mixture 15 of the first baking additive 6 and the second baking additive 6' from the transfer chamber 14. The dosing apparatus 1 further comprises an injection conduit 17 that is connected between the discharge outlet 28 of the transfer vessel 13 and an input opening 29 of the injector 23. The dosing apparatus 1 is further provided with a second flow control unit 16 fluid connected between the discharge outlet 28 and the injector opening 26. The second flow control unit 16 is shown to be set into a position that blocks a flow of a fluid from the discharge outlet 28 to the injector opening 26.

The dosing apparatus 1 further comprises a source of pressurized fluid 11 connected via pressurized fluid conduit 10 to the baking additive inlet 27. The source of pressurized fluid is configured for providing a pressurized fluid, in particular pressurized air, to the transfer chamber 14 for pressurizing the transfer chamber 14. The injector 23 is configured for directing a jet comprising a pressurized fluid and the mixture 15 of the first and second baking additives 6, 6' via the injector opening 26 into the hopper chamber 18 in a first direction 24. The first direction 24 is shown to face towards the discharge opening 21 and away from the filling opening 20.

The assembly as described above may be used to inject a predetermined amount of the first baking additive 4 and a predetermined amount of the second baking additive 4' into the baking composition 19 present in the hopper chamber 18. After a dosing of the predetermined amounts of the first and/or second baking additives into the transfer chamber 14 by the dosing units 3, 3', the transfer chamber 14 is sealed by closing the first flow control unit 9 to fluid disconnect the baking additive inlet 27 from the intermediate chamber 8 and each of the dosing units 3, 3'. In the example shown in figure 1, the second flow control unit 16 is set to prevent a flow of a fluid therethrough. As a result, the transfer chamber 14 is now substantially sealed. The transfer chamber 14 is subsequently pressurized by causing the source of pressurized fluid to provide a pressurized fluid via the pressurized air conduit 10 and the baking additive inlet 27 into the transfer chamber 14. Upon causing the second flow control unit 16 to permit a fluid of a fluid therethrough, the predetermined amount of the first and/or second baking additives 4, 4' is discharged by the pressurized fluid in the transfer chamber 14 via the discharge outlet 28, the injection conduit 17 through the injection opening 26 into the baking composition 19 in the first direction 24. As a result, the predetermined amount of the first and/or second baking additive 4, 4' has been transferred from the transfer chamber 14 into the hopper chamber 18, wherein a loss of the first and/or second baking additives 4, 4' in a form of airborne dust is substantially prevented due to the layer of the baking composition 19 in the hopper chamber 18 acting as a barrier.

The dosing apparatus 1 is further shown to comprises a control unit 12 that is communicatively connected to each of the pair of dosing units 3, 3', the first flow control unit 9, the second flow control unit 16 and the source of pressurized fluid 11. The control unit 12 is configured to cause the assembly to perform the above method for dosing and injecting the predetermined amount of the first baking additive 3 and the predetermined amount of the second baking additive 3' into the baking composition 19. Furthermore, the injector 23 is shown to be provided with a third flow control unit 30, in particular a non-return valve 30, to prevent a flow or loss of the baking composition 19 into the injection conduit 17 while allowing for a flow of the first baking additive 4 and/or the second baking additive 4' from the injection conduit 17 into the hopper chamber 18 through the injector opening 26.

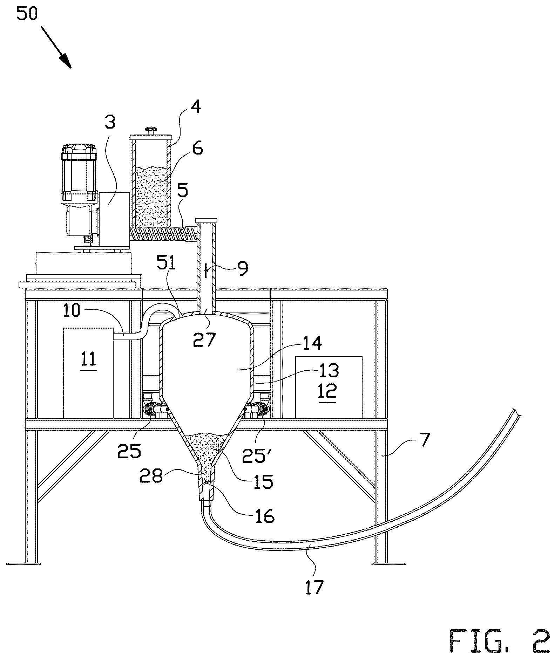

Figure 2 shows a second example of an assembly comprising a dosing apparatus 50. The dosing apparatus 50 of figure 2 is substantially similar to dosing apparatus 1 shown in figure 1. Accordingly, the same reference symbols are used to denote the same or similar features. The dosing apparatus 50 in contrast to the dosing apparatus 1 shown in figure 1, is provided with a single dosing unit 3 configured for dosing a baking additive into the transfer chamber 14 of the transfer vessel 13. The dosing apparatus according to the present example is not provided with an intermediate chamber arranged between the dosing unit 3 and the transfer chamber 14.

The dosing apparatus 50 is shown to comprise a source of pressurized fluid 11 and a pressurized fluid conduit 10 for providing a pressurized fluid from the source of pressurized fluid 11 to the transfer chamber 14. In contrast to the dosing apparatus 1 of figure 1 however, the pressurized fluid conduit 10 is fluid connected via a separate pressurized fluid inlet 51 that is distinct from a baking additive inlet 27. It is to be understood that the dosing apparatus 50 may be combined with the hopper 1 shown in figure 1, wherein the injection conduit 17 connects between an discharge outlet 28 of the dosing apparatus 50 and the injector opening of the hopper.

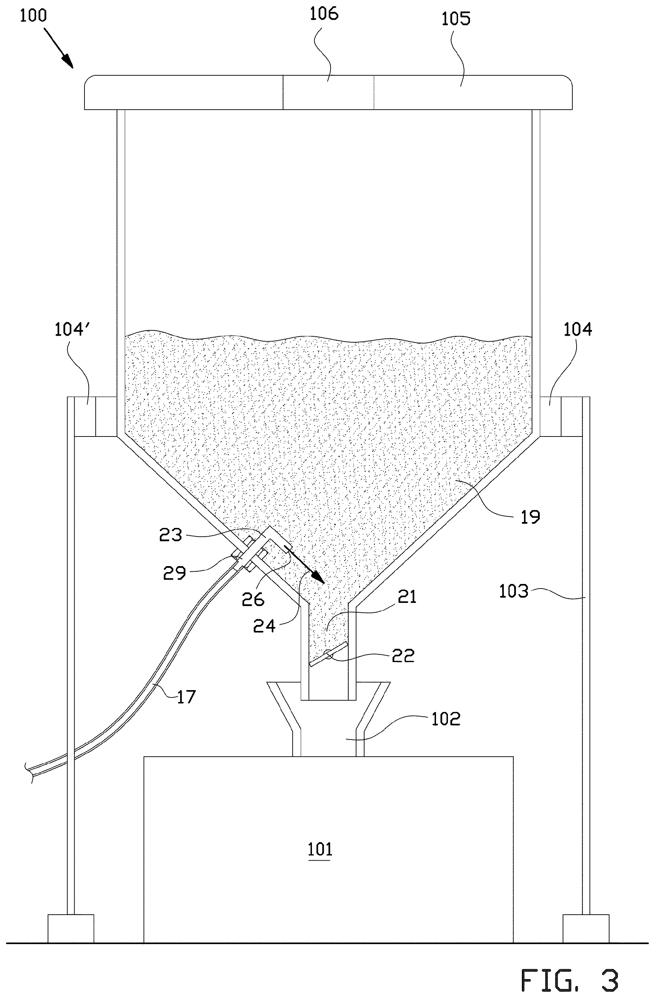

Figure 3 shows a third example of an assembly comprising a hopper 100. The hopper 100 of figure 2 is substantially similar to hopper 2 shown in figure 1. Accordingly, the same reference symbols are used to denote the same or similar features. The hopper 100 in contrast to the hopper 2 shown in figure 1, is mounted via a pair of weighing units 104, 104' to a frame 103. The pair of weighing units 104, 104' are configured for weighing the hopper chamber and the baking composition 19 arranged in the hopper chamber. The third example of the assembly is furthermore provided with a mixing and/or kneading unit 101. The mixing and/or kneading unit 101 comprises a transfer funnel 102 and is arranged at least partially below a discharge opening 21 of the hopper 100. The mixing and/or kneading unit 101 is configured for receiving the baking composition 19 and one or more baking additives injected in the baking composition 19 via the transfer funnel 102. The hopper 100 is furthermore provided with a filter unit 105 for removing airborne particles generated by a filling of the hopper chamber with the baking composition 19 via a filling inlet of the hopper 100. The filter unit 105 is shown arranged at an upper or top portion of the hopper chamber.

It is to be understood that the third example of the assembly may combined with the dosing apparatus 1 as shown in figure 1 or the dosing apparatus 50 as shown in figure 2. In particular, the injection conduit 17 of the dosing apparatus of figures 1 and 2 may be fluid connected to an injector 23 of the hopper 100 for injection a baking additive via the injection opening 26 into the baking composition 19. Furthermore, it is to be understood the method described in reference to the first example of the assembly can be applied to the second and third examples as described above or a combination thereof is described above.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. A method for dosing a baking additive into a baking composition, wherein the method comprises the following steps:
- providing a hopper, wherein the hopper comprises a hopper chamber and an injector, wherein the injector comprises an injection opening that debouches in the hopper chamber,
- providing the baking composition into the hopper chamber, wherein the baking composition at least partially covers the injection opening,
- providing a dosing apparatus comprising a transfer chamber, wherein the transfer chamber is connected to the injection opening of the injector,
- dosing a predetermined amount of the baking additive into the transfer chamber,
- pressurizing the transfer chamber by providing a pressurized fluid to the transfer chamber, and
- injecting the baking additive into the baking composition via the injection opening by fluid connecting the transfer chamber to the injection opening.

2. The method according to claim 1, wherein the hopper chamber further comprises a discharge opening arranged at a bottom portion of the hopper chamber and a filling opening arranged at a top portion of the hopper chamber,
wherein the step of injecting the baking additive into the baking composition comprises directing a jet comprising a pressurized fluid and the baking additive into the hopper chamber in a first direction,
wherein the first direction faces towards the discharge opening and/or away from the filing opening.

3. The method according to claim 1 or 2, wherein the dosing apparatus further comprises a dosing unit, wherein the dosing unit comprises a dosing reservoir comprising the baking additive,
wherein the step of dosing the predetermined amount of the baking additive into the transfer chamber further comprises causing the dosing unit to dose the predetermined amount of the baking additive.

4. The method according to claim 3, wherein the dosing apparatus further comprises:
- an intermediate chamber that is fluid connected to the dosing unit, wherein the intermediate chamber is arranged downstream from the dosing unit and upstream from the transfer chamber, and
- a further dosing unit fluid connected to the intermediate chamber and comprising a further dosing reservoir, wherein the further dosing reservoir comprises a further baking additive different from the baking additive,
wherein the step of dosing the predetermined amount of the baking additive further comprises:
- causing the dosing unit to dose the predetermined amount of the baking additive into the intermediate chamber,
- causing the further dosing unit to dose the predetermined amount of the further baking additive into the intermediate chamber, and
- transferring the baking additive and the further baking additive from the intermediate chamber to the transfer chamber.

5. The method according to any one of the previous claims, wherein the method further comprises a step of sealing the transfer chamber, wherein the step of sealing the transfer chamber is performed after the step of dosing the predetermined amount of the baking additive into the transfer chamber and before the step of pressurizing the transfer chamber.

6. The method according to claim 5, wherein the transfer chamber further comprises a baking additive inlet for transferring the predetermined amount of the baking additive into the transfer chamber,
wherein the dosing apparatus further comprises a first flow control unit arranged upstream from the baking additive inlet and downstream from the dosing unit,
wherein the step of sealing the transfer chamber further comprises causing the first flow control unit to block a fluid connection between the baking additive inlet of the transfer chamber and the dosing unit.

7. The method according to claim 5 or claim 6, wherein the transfer chamber further comprises a discharge outlet for discharging the predetermined amount of the baking additive from the transfer chamber,
wherein the dosing apparatus further comprises an injection conduit connected between the discharge outlet of the transfer chamber and the injector for providing a fluid connection between the discharge outlet of the transfer chamber and the injection opening of the injector,
wherein the dosing apparatus further comprises a second flow control unit arranged downstream from the discharge outlet of the transfer chamber and upstream from the injection opening,
wherein the step of sealing the transfer chamber further comprises causing the second flow control unit to block a fluid connection between the discharge outlet of the transfer chamber and the injection opening.

8. The method according to any one of the previous claims, wherein the step of providing the baking composition into the hopper chamber comprises covering the injection opening with a layer of the baking composition.

9. The method according to any one of the previous claims, wherein the method further comprises the following steps performed after the step of injecting the baking additive into the baking composition:
- discharging the baking composition and the baking additive through a discharge opening of the hopper into a kneading and/or mixing vessel,
- adding at least one liquid, and
- mixing and/or kneading the baking composition, the baking additive and the at least one liquid into a dough.

10. The method according to any one of the previous claims, wherein the method further comprises the following steps:
- determining a first weight of the transfer chamber, wherein the step of determining the first weight of the transfer chamber is performed after the step of providing the predetermined amount of the baking additive into the transfer chamber and before the step of injecting the baking additive into the baking composition, and
- determining a second weight of the transfer chamber, wherein the step of determining the second weight of the transfer chamber is performed after the step of injecting the baking additive into the baking composition.

11. An assembly for dosing a baking additive into a baking composition, wherein the assembly comprises a hopper, wherein the hopper comprises:
- a hopper chamber for holding the baking composition, and
- an injector comprising an injection opening that debouches in a lower portion of the hopper chamber for injecting the baking additive into the hopper chamber,
wherein the assembly further comprises a dosing apparatus, wherein the dosing apparatus comprises:
- a transfer chamber for holding the baking additive, wherein the transfer chamber comprises a baking additive inlet for receiving a predetermined amount of the baking additive and a discharge outlet for discharging the predetermined amount of the baking additive,
- an injection conduit connected with the discharge outlet of the transfer chamber and an input of the injector for transferring the predetermined amount of the baking additive from the transfer chamber to the injection opening, and
- a source of pressurized fluid connected to the transfer chamber via the baking additive inlet or a pressurized fluid inlet for providing a pressurized fluid to the transfer chamber.

12. The assembly according to claim 11, wherein the hopper chamber further comprises a discharge opening for discharging the baking composition from the hopper chamber, wherein the discharge opening is arranged at a bottom portion of the hopper chamber,
wherein the hopper chamber further comprises a filing opening for providing the baking composition into the hopper chamber, wherein the filing opening is arranged at a top portion of the hopper chamber,
wherein the injector is configured for directing a jet comprising a pressurized fluid and the baking additive via the injection opening into the hopper chamber in a first direction,
wherein the first direction faces towards the discharge opening and/or away from the filling opening.

13. The assembly according to claim 11 or claim 12, wherein the dosing apparatus further comprises a dosing unit for dosing the predetermined amount of the baking additive into the transfer chamber,
preferably wherein the dosing apparatus further comprises:
- an intermediate chamber fluid connected to the dosing unit, wherein the intermediate chamber is arranged downstream from the dosing unit and upstream from the transfer chamber, and
- a further dosing unit fluid connected to the intermediate chamber, wherein the further dosing unit is configured for dosing a further baking additive into the intermediate chamber.

14. The assembly according to claim 13, wherein the dosing apparatus further comprises a first flow control unit arranged upstream from the baking additive inlet and downstream from the dosing unit, wherein the first flow control unit is configured for controlling a flow of fluid between the dosing unit and the baking additive inlet.

15. The assembly according to any one of the claims 11 to 14, wherein the assembly further comprises a control unit configured for causing the assembly to perform the method according to any one of the claims 1 to 10.
